# EUROPÄISCHE PATENTSCHRIFT

(11) **EP 3 154 794 B1**
(45) Veröffentlichungstag und Bekanntmachung des Hinweises auf die Patenterteilung: **20.04.2022**
(21) Anmeldenummer: 15756832.0
(22) Anmeldetag: 11.05.2015
(51) Int. Cl.: B42D 25/328, G02B 5/18, G02B 5/02

(54) **SICHERHEITSELEMENT UND VERFAHREN ZUR HERSTELLUNG EINES SICHERHEITSELEMENTS MIT LICHTSTREUENDEN STRUKTUREN**
SECURITY ELEMENT AND METHOD FOR PRODUCING A SECURITY ELEMENT HAVING LIGHT-SCATTERING STRUCTURES
ÉLÉMENT DE SÉCURITÉ ET PROCÉDÉ DE FABRICATION D'UN ÉLÉMENT DE SÉCURITÉ MUNI DE STRUCTURES DISPERSANT LA LUMIÈRE

(30) Priorität: 10.06.2014 AT 4542014
(43) Veröffentlichungstag der Anmeldung: 19.04.2017
(73) Patentinhaber: Hueck Folien Gesellschaft m.b.H., 4342 Baumgartenberg (AT); Joanneum Research Forschungsgesellschaft mbH, 8010 Graz (AT)
(72) Erfinder: TRASSL, Stefan, 4342 Baumgartenberg (AT); SCHMIDEGG, Klaus, 8200 Gleisdorf (AT); BELEGRATIS, Maria, A-8212 Pischelsdorf (AT); SCHMIDT, Volker, A-8212 Pischelsdorf (AT); STEINDORFER, Michael, 8046 Stattegg (AT); STADLOBER, Barbara, A-8044 Graz (AT)
(74) Vertreter: KLIMENT & HENHAPEL
(86) Internationale Anmeldenummer: PCT/EP2015/000970
(87) Internationale Veröffentlichungsnummer: WO 2015/188908

(56) Entgegenhaltungen:
- EP-A1- 2 508 922
- WO-A1-2011/161482
- WO-A1-2014/001283
- ALEXANDER B. CHRISTIANSEN ET AL: "Imprinted and injection-molded nano-structured optical surfaces", PROCEEDINGS OF SPIE, Bd. 8818, 19. September 2013 (2013-09-19), Seite 881803, XP055099258, ISSN: 0277-786X, DOI: 10.1117/12.2025133
- KANG S H ET AL: "Replication of butterfly wing microstructures using molding lithography", CURRENT APPLIED PHYSICS, NORTH-HOLLAND, AMSTERDAM, NL, Bd. 10, Nr. 2, 1. März 2010 (2010-03-01), Seiten 625-630, XP026747005, ISSN: 1567-1739, DOI: 10.1016/J.CAP.2009.08.007 [gefunden am 2009-08-12]

## Beschreibung

Die Erfindung betrifft ein Verfahren zur Herstellung von Sicherheitselementen mit ungeordneten lichtstreuenden Strukturen, die winkelunabhängige optische Farbeffekte aufweisen.

Sicherheitselemente, die ein Merkmal mit einem optischen Farbeffekt aufweisen, werden entweder über die Prägung einer Oberflächenstruktur (Relief) und/oder über das Verdrucken von Farbpigmenten erzeugt. Die durch Prägung erzeugten optischen Effekte sind im Allgemeinen diffraktive Effekte periodischer (oder nicht periodischer) Strukturen. Solche Strukturen können in Abhängigkeit von der Wellenlänge des einfallenden Lichts richtungsabhängige Farbeindrücke erzeugen.

Aus der DE 102007020982 A1 ist ein Verfahren und Sicherheitslabel zur visuellen Kennzeichnung eines Originalprodukts bekannt. Dabei wird eine einzigartige zufällige Mikroanordnung aus zufällig flächenverteilten Mikroanordnungselementen mit einer charakteristischen Ausprägung am zu kennzeichnenden Produkt vorgesehen. Die beschriebenen Anordnungen weisen keine Farbeffekte auf.

In WO 2006/007742 AI ist ein anisotropes optisches Merkmal einer nicht-periodischen lichtstreuenden Struktur beschrieben, das einen Farbwechsel unter Veränderung des Blickwinkels hervorruft.

WO 2014/001283 A1, EP 2 508 922 A1 und WO 2011 /1611482 A1 offenbaren Verfahren zur Herstellung von Sicherheitselementen .

Aufgabe der Erfindung war es, ein Verfahren zur Herstellung eines Sicherheitselementes bereitzustellen, das einen winkelunabhängigen optischen Farbeffekt auf Basis omnidirektionaler Lichtstreuung an Strukturen im sub-µm Bereich aufweist (Strukturfarben).

Gegenstand der Erfindung ist daher die Herstellung eines Sicherheitselementes aufweisend eine thermoplastische oder photoempfindliche Schicht, wobei in eine Oberfläche der Schicht nicht periodische zufällig angeordnete (randomisierte) Strukturen im sub-mikrometer Bereich eingebracht sind, die einen winkelunabhängigen optischen Effekt, wie einen Farbeffekt erzeugen.

Sicherheitsmerkmale mit einem winkelunabhängigen Farbeffekt basierend auf nicht-periodischen zufällig angeordneten (randomisierten) Strukturen weisen eine erhöhte Fälschungssicherheit auf.

Gegenüber den bekannten optischen Effekten, die über diffraktive, periodische Strukturen erzeugt werden, haben diese nicht-periodischen, zufällig angeordneten (randomisierten) Strukturen den Vorteil, dass nur über die genaue Kenntnis der Struktur und deren Anordnung das Sicherheitsmerkmal kopiert werden kann.

Ein weiterer Vorteil liegt in der Winkelunabhängigkeit des optischen Effekts, der dadurch sehr leicht als echt zu identifizieren ist.

Weiters besteht die Möglichkeit, über die Anordnung der nicht-periodischen Strukturen sowohl Farb- als auch matt-weiße, bzw. gegebenenfalls in Kombination mit einem Absorber auch matt-schwarze Effekte zu erzeugen.

Dadurch kann über die räumliche Variation der nicht-periodischen Strukturen eine ortsaufgelöste Farbkarte erzeugt werden und damit - aufgrund der hohen Auflösung beim Herstellprozess der nicht-periodischen Strukturen - Buchstaben, Ziffern, Muster, etc. in höchster Auflösung in einem Bereich von 1 bis 10 µm dargestellt werden.

Das Sicherheitsmerkmal weist einen winkelunabhängigen optischen Effekt basierend auf nicht-periodischen Strukturen im sub-mikrometer Bereich auf.

Die nicht-periodischen Strukturen im sub-mikrometer Bereich besitzen typischerweise strukturelle Details, die für die Farbgebung ausschlaggebend sind im Bereich < 1µm, bevorzugt < 500 nm.

Die Form der Strukturen ist im einfachsten Fall ein Ellipsoid.

Ferner können die Strukturen komplexer ausgebildet sein und als leicht hinterschnittene Strukturen, wie Bäumchenstrukturen, Kammstrukturen, Fächerstrukturen oder dergleichen vorliegen. Diese Strukturen werden in weiterer Folge als lichtstreuende Strukturen (LS) bezeichnet.

Der durch Randomisieren der LS hervorgerufene optische Effekt vermittelt einen diffusen, jedoch über einen großen Bereich an Beobachtungswinkeln gleichförmigen Farbeindruck, beispielsweise weiß, grün, rot, blau, gelb, lila und dergleichen.

Die für den Farbeindruck verantwortliche Anordnung der LS besitzt ein hohes Maß an Zufälligkeit und ist ein individuelles Merkmal eines Fälschungsschutzes. Außerdem ist der Farbeindruck beständiger als der von Pigmenten und verblasst nicht.

Der Farbeindruck kann bei der Herstellung verändert werden, indem die Anordnung der Strukturelemente, welche diesen erzeugen, angepasst wird. Wird die Struktur zerstört, verschwindet oder verändert sich auch der Farbeindruck.

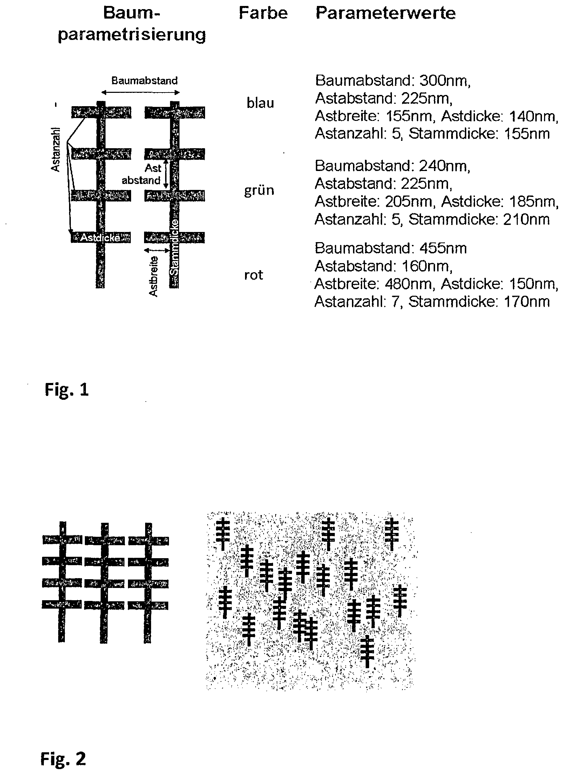

Parametrisierte Modelle der farbgebenden Strukturen werden mit Hilfe wellenoptischer finite-difference-time-domain (FDTD) Simulationen untersucht. Typische Parameter am Beispiel der vom Morpho-Falter inspirierten Strukturen (hier allgemein als Bäumchen bezeichnet) sind z.B. der Abstand zwischen den einzelnen Struktureinheiten, der Abstand, Winkel und Dicke der Unterstrukturen. Die so erhaltene Korrelation zwischen Struktureigenschaften (Geometrie und Materialeigenschaften wie komplexer Brechungsindex) und spektralem Reflexionsverhalten erlaubt die Definition einer Strukturgeometrie für einen gewünschten Farbeindruck. Zusätzlich erlaubt die gleichzeitige Optimierung der vielen Geometrieparameter der 3D Struktur die Verstärkung einer bestimmten Farbe bei gleichzeitiger Unterdrückung anderer Spektralbereiche wie z.B. der Komplementärfarbe, sodass relativ schmale und definierte Reflexionsbanden möglich sind. Das spektrale Reflexionsvermögen wird anhand einer Farbkoordinate in einem CIE Diagramm eingetragen und korreliert die Struktur mit der entsprechenden Farbe. Als Beispiele sind in Fig. 1 die Parameter für einen blauen, grünen und roten Farbeindruck angegeben.

Die lamellenartige geordnete Unterstruktur ist für den Farbeindruck aufgrund konstruktiver Interferenz des reflektierten Lichtes verantwortlich. Der Abstand und die Anzahl der einzelnen lamellenartigen Unterstrukturen beeinflussen dabei den Reflexionsgrad für eine bestimmte Wellenlänge. Bei regelmäßiger Anordnung identischer Bäumchenstrukturen zeigen sich wieder typische Gittereffekte regelmäßiger geordneter Strukturen. Durch Randomisierung, also der zufälligen Anordnung einzelner Bäumchenstrukturen zueinander, werden die Gittereffekte aufgehoben und es entstehen diffuse winkelunabhängige Farbeindrücke durch das Zusammenwirken von Interferenz, Beugung und inkohärenter Lichtstreuung zwischen den zufällig angeordneten Baumstrukturen. (Fig. 2.)

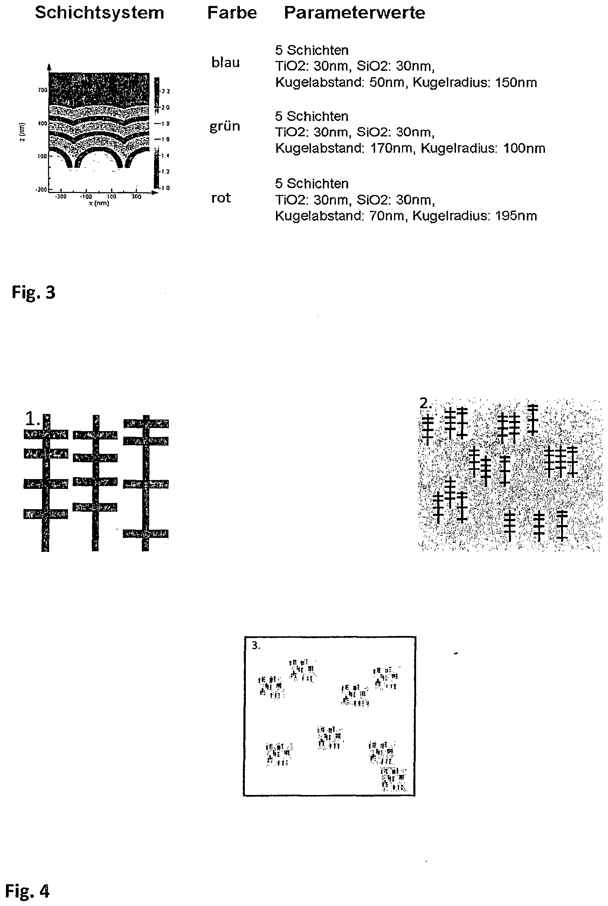

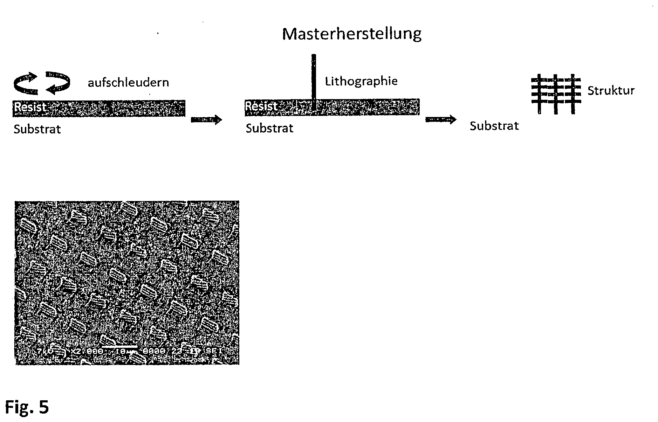

Neben komplexen 3D Strukturen werden nach demselben Verfahren auch einfache Strukturen mit einem Mehrschichtsystem aus abwechselnd Hoch- und Niedrigindexmaterialien hergestellt. Die Farbe wird durch die Geometrie der Strukturen und den Aufbau des Schichtsystems erzeugt (Fig. 3)

Da praktisch eine beliebige Vielzahl an zufälligen Anordnungen der LS einen diffusen Farbeindruck hervorruft, kann zu jedem Sicherheitsmerkmal eine zufällig generierte Urstruktur archiviert werden, mit welcher die Authentizität überprüft werden kann.

Im Gegensatz zu pigmentbasierten oder molekularen Farbstoffen entstehen sog. Strukturfarben durch wellenoptische Phänomene wie Interferenz, Beugung und Lichtstreuung an strukturellen bzw. geometrischen Anordnungen von Materialien mit unterschiedlichen optischen Eigenschaften. Um einen Farbeindruck hervorzurufen, müssen die Dimensionen dieser geometrischen Anordnungen in der Größenordnung der Lichtwellenlänge im Bereich des sichtbaren Spektrums sein.

Der resultierende Farbeindruck der farbgebenden Strukturen wird durch die optischen Eigenschaften der thermoplastischen oder photoempfindlichen Schicht bzw. benachbarte Schichten beeinflusst. In Kombination mit dunklen Farbpigmenten (z.B. Melanin, Russ, o.ä.) bzw. lichtabsorbierenden Schichten kann der Farbeffekt verstärkt oder mit hellen Farbpigmenten bzw. reflektierenden Schichten abgeschwächt werden.

Das dunkle Pigment Melanin beispielsweise hebt den strukturbedingten Farbeindruck durch Absorption nicht benötigter Wellenlängen hervor, während ein hoher Reflexionsgrad der thermoplastischen oder photoempfindlichen Schicht bzw. benachbarte Schichten zu Pastelltönen führt. Ein hoher Reflexionsgrad kann den Farbeindruck auch komplett überdecken.

Im einfachsten Fall umfassen derartige strukturelle Anordnungen einen Stapel von dünnen transparenten Schichten oder auch transparente Muster mit Luftblasen oder mit eingeschlossenen Partikeln bis hin zu speziell entworfenen Architekturen mikroskopischer Strukturen wie z.B. photonische Kristalle. Das Maß an Ordnung und die konkrete räumliche Anordnung bestimmen die Farbe und die Winkelabhängigkeit der reflektierten elektromagnetischen Strahlung.

Einen winkelabhängigen Farbeindruck erzielt man durch eine periodische Anordnung von Bereichen mit unterschiedlichem Brechungsindex (z.B. Gitterstrukturen oder mehrere Lagen von dielektrischen Materialien mit unterschiedlichem Brechungsindex, die abwechselnd mit hohem und niedrigem Brechungsindex angeordnet sind). Die Interferenz des an den verschiedenen Bereichen reflektierten Lichts erzeugt bei phasenrichtiger Überlagerung (konstruktive Interferenz) brillante, schillernde Farben.

Die konstruktive Interferenz findet aber für verschiedene Beobachtungswinkel für unterschiedliche Wellenlängen statt, sodass sich diese Farbtöne bei Beobachtung aus verschiedenen Richtungen ändern. In diesem Fall weisen Objekte, welche mit diesen Strukturen beschichtet sind eine genaue, klar definierte Farbe auf, jedoch ist diese Farbe nur in einem engen Bereich in einer Richtung erkennbar (richtungsabhängig). Während geordnete Strukturen mit dem Licht interagieren und die Farben je nach Betrachtungswinkel überwiegend durch konstruktive Interferenz variieren, entstehen die Strukturfarben an randomisierten Strukturen aufgrund des Zusammenwirkens von Interferenz, Beugung und inkohärenter Streuung aus einer Vielzahl ungeordneter Struktureinheiten mit geordneten Unterstrukturen.

Ausgehend von der Farbe-Struktur-Korrelation aus den FDTD Simulationen wird die Struktur in ein für die Lithographie kompatibles Datenformat gebracht. Dabei wird auch der Grad der Randomisierung definiert, wobei folgende Arten der Randomisierung zu unterscheiden sind:
1) Randomisierung der in den Simulationen definierten Parameter der Strukturgeometrie, wodurch eine zufällige Abweichung der Sollstruktur erreicht wird und so eine statistische Verteilung ähnlicher Strukturen erzeugt wird, die zur Richtungsunabhängigkeit des Farbeindrucks beiträgt.
2) Randomisierte Verteilung der Strukturen aus 1) innerhalb eines Flächenbereichs (Pixel).
3) ggf. randomisierte Verteilung der Pixel über eine größere Fläche. (Fig.4)

In einer bevorzugten Ausführungsform wird ein Bereich mit randomisierten Strukturen (Pixel) definiert, der einen winkelunabhängigen Farbeffekt zeigt. Die Größe der Pixel liegt im Bereich von 1 - 500 µm, bevorzugt 1 - 50 µm.

Aus mehreren solcher Pixel mit unterschiedlichen Farben können hochaufgelöste Bilder mit winkelunabhängigen Farbeffekten erzeugt werden.

Zur Herstellung von größeren homogenen Farbflächen gleicher Farbe kann die Anordnung gleichfarbiger Pixel randomisiert werden.

Die nicht-periodischen Strukturen im sub-mikrometer Bereich können mit Hilfe einer geeigneten lithografischen Methode (z.B. laserbasierte Lithographie, wie direktes Laserschreiben oder Laserinterferenzlithographie, Elektronenstrahllithographie, Focused Ion Beam (FIB) Lithographie, Proton Beam Lithographie, Deep Proton Writing etc.) in einem photoempfindlichen Material (Photolack) hergestellt werden. Diese Urstrukturen üblicherweise als "Master" bezeichnet.

Das erfindungsgemäße Sicherheitselement wird vorteilhafterweise durch (3D) - Laserlithographie oder Elektronenstrahllithographie hergestellt.

Als Ausgangsmaterial für lithografische Verfahren wird zunächst ein geeigneter photoempfindlicher oder elektronenstrahlempfindlicher Lack (Resist) auf ein Substrat aufgebracht.

Der Resist wird meist durch eine Photopolymerisation modifiziert, indem die Löslichkeit geändert wird. Durch anschließendes Entfernen des unbelichteten Lacks (bei einem Negativlack) entsteht eine freistehende Struktur. Bei einem positiven Lack entstehen "Löcher" nach dem Entfernen des belichteten Materials.

Zur Herstellung des Masters wird zuerst ein geeignetes Substrat gereinigt. Als Substrate kommen vorzugsweise Glas, Si-Wafer und dergleichen in Frage. Das Substrat wird mit einem geeigneten Lösungsmittel, beispielweise Aceton und/oder Isopropanol vorgereinigt. Ebenso ist eine Sauerstoffplasmavorbehandlung für einige Materialien vorteilhaft, um glatte, gleichmäßige Lackschichten herzustellen.

Der Resist wird dann entweder aufgeschleudert (durch einen Spin Coater) oder aufgetropft für hohe Strukturen, die einen dicken Lackfilm benötigen.

Es ist aber auch möglich den Lack durch Drucken, Aufstreichen, Walzenauftrag, Tauchen und dergleichen aufzubringen.

Als Resistschichten sind erfindungsgemäß insbesondere Negativ-Photoresists, wie SU-8 (Microchem Corp), hybride Polymere, wie Ormocer^{®}, acrylbasierte Fotolacke wie IP-L, IP-G geeignet. Einige Lacke, wie beispielsweise SU-8 verlangen eine thermische Vorbehandlung (Pre-Bake), bei der das Lösungsmittel des Lacks verdampft wird und der Lack beim Abkühlen verfestigt.

Andere Lacke, wie IP-L benötigen keine Vorbehandlung. Als Lackschichten sind ebenso erfindungsgemäß Positiv-Photoresists, wie PMMA oder Photoresists aus auf Acrylbasis, wie AZ^{®}6615 (MicroChemicals GmbH, Deutschland) geeignet.

Die Elektronenstrahllithographie (EBL) ist ein Direktschreibverfahren zur Herstellung von höchstaufgelösten Strukturen in elektronenstrahlempfindlichen Lacken (Resists) mittels fokussierten Elektronenstrahls. Bei der Belichtung trifft ein beschleunigter Elektronenstrahl, der durch elektrische und magnetische Felder auf die Probenoberfläche fokussiert und positioniert wird, auf die Resistoberfläche und verändert dabei dessen chemische Struktur.

Die Laserlithographie (LL) ist ein Direktschreibverfahren, mit dem mit Hilfe eines fokussierten oder unfokussierten Laserstrahls eine lokale Modifikation in einem Resist hervorgerufen wird. Der Laser weist üblicherweise eine Wellenlänge auf, die in einem geeigneten spektralen Absorptionsbereichs des Resists liegt. Der Laser kann kontinuierlich oder gepulst betrieben werden. Die Pulsdauer kann im Femtosekundenbereich bis Nanosekundenbereich liegen. Die durch den Laser hervorgerufene Modifikation kann physikalischer und/oder chemischer Natur sein, in dem der Resist lokal entfernt oder abgeschieden wird, oder die Löslichkeit des Resists beeinflusst wird oder optische Eigenschaften wie Brechungsindex oder Absorptionskoeffizient verändert werden. Der Laserstrahl wird dabei in definierter Art und Weise mit Hilfe einer geeigneten Vorrichtung relativ zum Master bewegt, wodurch ein Muster (Struktur) in den Resist übertragen (geschrieben) wird. Die technische Ausführung der Vorrichtung zur relativen Bewegung des Lasers zum Zielmaterial kann in Form von bewegten Achsen (translatorisch, rotatorisch) oder in Form galvanometrischer Scanner vorliegen.

Es kann auch der Laser räumlich fixiert sein und der Master auf einer geeigneten Bewegungseinheit montiert sein.

Komplexe Strukturen werden vorzugsweise mittels 3D-Laserlithographie erzeugt.

Die 3D-Laserlithographie ist ein Direktschreibverfahren, bei dem mittels eines fokussierten Lasers mit einer definierten Wellenlänge, die nicht im Absorptionsbereich des zu strukturierenden Materials liegen darf, eine Struktur in ein photosensitives Material eingeschrieben wird. Der Unterschied zu herkömmlichen Laserschreibverfahren mittels UV Laser ist, dass die Wechselwirkung zwischen Laser und Material auf einem nicht-linearen optischen Prozess, der Mehrphotonenabsorption, beruht.

Erst dadurch ist es möglich, in einem Belichtungsschritt 3D-Strukturen zu erzeugen, da die Modifizierung des Materials durch den Laser auf einen kleinen Bereich um den Fokus beschränkt bleibt. Vorteile sind dabei die absolute Freiheit und Flexibilität in der Umsetzung eines Modells einer Struktur in einen physischen Körper, wie ein Prägewerkzeug, sowie die erreichbare hohe Auflösung, die nicht durch Beugung des Lichts limitiert ist. Die Erzeugung einer Struktur erfolgt durch ein definiertes Bewegen des Laserfokus durch das Material ("3D Laserstift"), der die Struktur somit in das Material einschreibt.

Die beschriebenen Direktschreibverfahren werden für die erfindungsgemäße Herstellung einer Masterstruktur für einen Prägestempel eingesetzt. Alternativ können andere Masteringverfahren, wie beispielsweise Phase Transition Mastering, die zur Herstellung von Nanostrukturen geeignet sind, verwendet werden.

Weitere Prozessschritte folgen, die aus diesen Strukturen ein für die großflächige Prozessierung kompatibles Prägewerkzeug herstellen, das letztendlich für farbgebende Strukturelemente auf flexiblen Foliensubstraten eingesetzt wird:
A) Herstellung eines Masters mit Strukturen mit randomisierten Unterstrukturen, wobei die Strukturen aus kleinen (< 1µm) linsenförmigen Strukturen aus Photolack bestehen, die randomisiert über eine Fläche verteilt werden, wobei die Randomisierung von einem regelmäßigen Gitter ausgeht, wobei jeder Gitterpunkt um einen zufälligen Betrag sowie um einen zufälligen Winkel von seiner Position in einem regelmäßigen Gitter versetzt wird, wobei die linsenförmigen Strukturen mit Hilfe eines Lasers durch Punktbelichtungen an den randomisierten Positionen hergestellt werden, wobei durch zufällige Variation einer Belichtungsdosis auch die Größe jeder einzelnen linsenförmigen Struktur randomisiert wird;
B) ggf. wird durch replikative Vervielfältigung (mehrere Step-and-Repeatprozesse) die Masterstruktur auf eine größere Fläche (großflächiger Master) ausgedehnt.

Aus dem Master bzw. dem großflächigen Master wird beispielsweise mittels galvanischer Abformung ein sogenannter Nickel-Shim hergestellt, der anschließend als Prägewerkzeug zur Herstellung von Produkten mit randomisierten Strukturen eingesetzt wird.

Das Sicherheitselement weist eine thermoplastische oder photoempfindliche Schicht auf, die ggf. auf einem Trägersubstrat aufgebracht ist.

Eine Oberfläche dieser Schicht wird nun mit dem Prägewerkzeug so strukturiert, dass die randomisierten Strukturen durch Abformung übertragen werden.

In einer bevorzugten Ausführungsform werden die erfindungsgemäßen Sicherheitsmerkmale in einem rollenbasierten Prägeprozess hergestellt. Geeignete Verfahren sind beispielsweise in der EP 1 310 381 beschrieben, auf deren Inhalt hiermit explizit Bezug genommen wird.

Als Trägersubstrate kommen beispielsweise Trägerfolien vorzugsweise flexible Kunststofffolien, beispielsweise aus PI, PP, MOPP, PE, PPS, PEEK, PEK, PEI, PSU, PAEK, LCP, PEN, PBT, PET, PA, PC, COC, POM, ABS, PVC, PTFE, ETFE (Ethylentetrafluorethylen), PFA (Tetrafluorethylen-Perfluorpropylvinylether-Fluorcopolymer), MFA (Tetrafluor-methylen-Perfluorpropylvinylether-Fluorcopolymer), PTFE (Polytetra-fluorethylen), PVF (Polyvinylfluorid), PVDF (Polyvinylidenfluorid), und EFEP (EthylenTetrafluorethylen-Hexafluorpropylen-Fluorterpolymer) in Frage.

Die Trägerfolien weisen eine Dicke von 5 - 700 µm, vorzugsweise 5 - 200 µm, besonders bevorzugt 5 - 50 µm auf.

Ferner können als Trägersubstrat auch Metallfolien, beispielsweise AI-, Cu-, Sn-, Ni-, Fe- oder Edelstahlfolien mit einer Dicke von 5 - 200 µm, vorzugsweise 10 bis 80 µm, besonders bevorzugt 20 - 50 µm dienen. Die Folien können auch oberflächenbehandelt, beschichtet oder kaschiert beispielsweise mit Kunststoffen oder lackiert sein.

Ferner können als Trägersubstrate auch zellstofffreies oder zellstoffhaltiges Papier, thermoaktivierbares Papier oder Verbunde mit Papier, beispielsweise Verbunde mit Kunststoffen mit einem Flächengewicht von 20 - 500 g/m², vorzugsweise 40 - 200 g/m² verwendet werden.

Ferner können als Trägersubstrate Gewebe oder Vliese, wie Endlosfaservliese, Stapelfaservliese und dergleichen, die gegebenenfalls vernadelt oder kalandriert sein können, verwendet werden. Vorzugsweise bestehen solche Gewebe oder Vliese aus Kunststoffen, wie PP, PET, PA, PPS und dergleichen, es können aber auch Gewebe oder Vliese aus natürlichen, gegebenenfalls behandelten Fasern, wie Viskosefasern eingesetzt werden. Die eingesetzten Vliese oder Gewebe weisen ein Flächengewicht von etwa 20 g/m² bis 500 g/m² auf. Gegebenenfalls müssen die Vliese oder Gewebe oberflächenbehandelt werden.

Das Trägersubstrat kann in einer weiteren Ausführungsform selbst die thermoplastische oder photoempfindliche Schicht darstellen.

Die strukturierte Oberfläche der thermoplastischen oder photoempfindlichen Schicht kann mit einer reflektierenden oder einer lichtabsorbierenden Metallisierung, einer HRI- oder LRI-Schicht oder einer Farbschicht versehen werden, wobei die Farbschicht kontrastierend sein kann.

Ferner können die erfindungsgemäßen, nicht periodischen randomisierten Strukturen auf einem Sicherheitselement auch mit weiteren funktionellen Schichten kombiniert sein, die beispielsweise magnetische, elektrisch leitfähige, physikalische, optische, optisch aktive oder optisch variable Eigenschaften aufweisen.

Als Schichten mit magnetischen Eigenschaften können Schichten, die paramagnetische, diamagnetische und auch ferromagnetische Stoffe, wie Eisen, Nickel und Cobalt oder deren Legierungen, deren Verbindungen oder Salze (beispielsweise Oxide oder Sulfide) Barium oder Cobalt-ferrite, hart- und weich magnetische Eisen- und Stahlsorten enthalten, verwendet werden.

Die optischen Eigenschaften der Schicht lassen sich durch sichtbare Farbstoffe bzw. Pigmente, lumineszierende Farbstoffe bzw. Pigmente, die im sichtbaren, im UV-Bereich oder im IR-Bereich fluoreszieren bzw. phosphoreszieren, Effektpigmente, wie Flüssigkristalle, Perlglanz, Bronzen und/oder Multilayer-Farbumschlagpigmente und wärmeempfindliche Farben bzw. Pigmente beeinflussen. Diese sind einzeln bzw. in allen möglichen Kombinationen einsetzbar.

Als elektrisch leitfähige Schichten, können Schichten, die Graphit, Ruß, leitfähige organische oder anorganische Polymere, Metallpigmente (beispielsweise Kupfer, Aluminium, Silber, Gold, Eisen, Chrom und dergleichen), Metalllegierungen wie Kupfer-Zink oder Kupfer- Aluminium oder auch amorphe oder kristalline keramische Pigmente wie ITO und ATO, dotierte oder nicht dotierte Halbleiter wie beispielsweise Silicium, Germanium oder lonenleiter wie amorphe oder kristalline Metalloxide oder Metallsulfide enthalten, eingesetzt werden.

Optisch aktive Strukturen sind beispielsweise diffraktive Strukturen, Beugungsstrukturen, Oberflächenreliefs, Hologramme, Kinegramme und dergleichen.

Unter optisch variablen Schichten werden Schichten verstanden, die einen vom Betrachtungswinkel abhängigen Farbeffekt zeigen, beispielsweise einen Farbverschiebungseffekt oder einen Farbkippeffekt. Beispiele dafür sind Dünnschichtelemente, Interferenzelemente, Fabry-Perrot-Filter und dergleichen.

Die mittels des erfindungsgemäßen Verfahrens hergestellten Sicherheitselemente sind für die Anwendung in oder auf Ausweisen, Karten, Banknoten oder Etiketten, Siegeln und dergleichen geeignet, aber auch als Verpackungsmaterial beispielsweise in der pharmazeutischen, der Elektronik- und/oder Lebensmittelindustrie, beispielsweise in Form von

Blisterfolien, Faltschachteln, Abdeckungen, Folienverpackungen und dergleichen.

Für die Anwendung als Sicherheitselemente werden die Substrate bzw. Folienmaterialien bevorzugt in Streifen, Fäden oder Patches geschnitten, wobei die Breite der Streifen oder Fäden vorzugsweise 0,5 - 20 mm betragen kann und die Patches vorzugsweise mittlere Breiten bzw. Längen von 0,3 - 20 mm aufweisen.

Die Sicherheitselemente können dabei zumindest teilweise eingebettet oder appliziert werden.

Für die Anwendung in oder auf Verpackungen wird das Folienmaterial bevorzugt in Streifen, Bänder, Fäden oder Patches geschnitten, wobei die Breite der Fäden, Streifen bzw. Bänder vorzugsweise 0,5 - 50 mm beträgt und die Patches vorzugsweise mittlere Breiten und Längen von 2 - 30 mm aufweisen.

Die Laserlithographie für die sub-mikrometer Masterstrukturen wird mit dem "Photonic Professional" (Fa. Nanoscribe GmbH, Deutschland) durchgeführt. Das

System ist mit einem Faserlaser (Wellenlänge 780nm, Pulsdauer 150fs, Repetitionsrate 100MHz, mittlere Ausgangsleistung <90mW) ausgestattet. Die Probe kann relativ zum Laserfokus grob über eine zweiachsige Motorbühne (Märzhäuser, Deutschland) bzw. hochgenau über eine dreiachsige Piezoeinheit (PI, Deutschland) positioniert werden.

Das System verfügt über eine Autofokuseinheit zum automatischen Auffinden der Grenzfläche zwischen Photolack und Substrat und ein Kamerasystem zum online Monitoring des Schreibprozesses und zum Auffinden etwaiger Registrierungsmarkern. Die Fokussierung des Lasers erfolgt über ein invertiertes Mikroskop (Zeiss, Deutschland), das mit mehreren Objektiven ausgestattet ist. Für die hochaufgelösten farbgebenden Strukturen wird standardmäßig das 100x Ölimmersionsobjektiv mit einer numerischen Apertur von NA=1.4 verwendet. Im Allgemeinen werden die Masterstrukturen in positive Photolacke (AZ-6615, AZ-1505, MicroChemicals GmbH, Deutschland) eingeschrieben und mit AZ 726 MIF (MicroChemicals GmbH, Deutschland) entwickelt, wodurch belichtetes Material entfernt wird.

Die Struktur selbst besteht aus kleinen (< 1µm) linsenförmigen Strukturen aus Photolack, die randomisiert über eine Fläche verteilt sind. Das Prinzip der Randomisierung geht von einem regelmäßiges Gitter aus (Gitterkonstante a). Jeder Gitterpunkt wird von seiner ursprünglichen Gitterposition um einen zufälligen Betrag (0 bis a) und einen zufälligen Winkel (0 bis 360°) versetzt. Dadurch entsteht ein vollständig randomisiertes Gitter innerhalb eines Pixels definierter Größe.

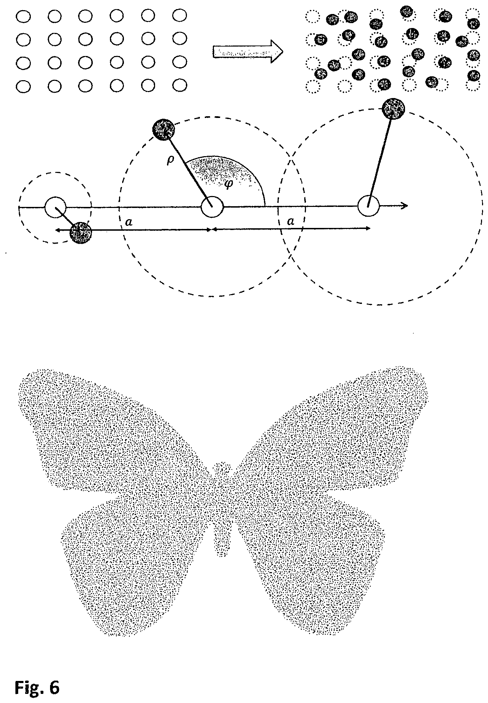

Dieser Pixel wird in weiterer Folge über eine größere Fläche und Form (z.B. Schmetterling) repliziert (Fig.6). Die linsenförmigen Strukturen werden mit Hilfe des Lasers durch Punktbelichtungen an den randomisierten Positionen hergestellt. Die Dosis für die Laserbelichtung liegt dabei für die verwendeten Photolacke typischerweise im Bereich 20-350 mJ/cm². Durch zusätzliche zufällige Variation der Belichtungsdosis innerhalb des geeigneten Bereichs wird erfindungsgemäß neben der Position auch der Durchmesser und die Höhe (allg. Größe) für jede einzelne linsenförmige Struktur randomisiert, um ein Maximum an inkohärenter Lichtstreuung zu erzielen.

### Beispiel 2:

Die Strukturen aus Beispiel 1 können in gleicher Art und Weise mittels Elektronenstrahllithographie hergestellt werden, wobei die einzelnen linsenartigen Strukturen eine typische Größe von 50 - 500 nm aufweisen und PMMA als positiver Photolack verwendet wird.

Die Belichtungsdosis liegt dabei dann im Bereich 190-240µC/cm2.

## Patentansprüche

1. Verfahren zur Herstellung eines Sicherheitselements mit lichtstreuenden Strukturen, **gekennzeichnet durch** folgende Verfahrensschritte:
a) Herstellung eines Masters mit Strukturen mit randomisierten Unterstrukturen, wobei die Strukturen aus linsenförmigen Strukturen aus Photolack bestehen, die kleiner als 1 µm sind und randomisiert über eine Fläche verteilt werden, wobei die Randomisierung von einem regelmäßigen Gitter ausgeht, wobei jeder Gitterpunkt um einen zufälligen Betrag sowie um einen zufälligen Winkel von seiner Position in einem regelmäßigen Gitter versetzt wird, wobei die linsenförmigen Strukturen mittels Laserlithographie oder Elektronenstrahllithographie durch Punktbelichtungen an den randomisierten Positionen hergestellt werden, wobei durch zufällige Variation einer Belichtungsdosis auch eine Größe, insbesondere Durchmesser und Höhe, der linsenförmigen Strukturen randomisiert wird;
b) Herstellung eines Prägewerkzeugs mit randomisierten Strukturen;
c) Abformen der randomisierten Strukturen des Prägewerkzeugs in eine Oberfläche einer thermoplastischen oder photoempfindlichen Schicht;
d) ggf. weitere Verfahrensschritte zur Aufbringung weiterer funktioneller Schichten bzw. Konfektionierung.

2. Verfahren nach Anspruch 1, **dadurch gekennzeichnet, dass** die linsenförmigen Strukturen mittels Laserlithographie hergestellt werden und es sich bei dem Laser um einen Faserlaser handelt.

3. Verfahren nach Anspruch 2, **dadurch gekennzeichnet, dass** der Faserlaser eine Wellenlänge von 780 nm, eine Pulsdauer von 150 fs, eine Repetitionsrate von 100 MHz und eine mittlere Ausgangsleistung von <90mW aufweist.

4. Verfahren nach einem der Ansprüche 1 bis 3, **dadurch gekennzeichnet, dass** die Masterstrukturen in positive Photolacke eingeschrieben und entwickelt werden, wodurch belichtetes Material entfernt wird.

5. Verfahren nach einem der Ansprüche 1 bis 4, **dadurch gekennzeichnet, dass** die linsenförmigen Strukturen mittels Laserlithographie hergestellt werden, wobei die Belichtungsdosis im Bereich 20-350 mJ/cm² liegt.

6. Verfahren nach einem der Ansprüche 1 oder 4, **dadurch gekennzeichnet, dass** die linsenförmigen Strukturen mittels Elektronenstrahllithographie hergestellt werden und eine Größe von 50-500 nm aufweisen.

7. Verfahren nach einem der Ansprüche 1, 4 oder 6, **dadurch gekennzeichnet, dass** die linsenförmigen Strukturen mittels Elektronenstrahllithographie hergestellt werden, wobei PMMA als positiver Photolack verwendet wird.

8. Verfahren nach einem der Ansprüche 1, 4, 6 oder 7, **dadurch gekennzeichnet, dass** die linsenförmigen Strukturen mittels Elektronenstrahllithographie hergestellt werden, wobei die Belichtungsdosis im Bereich 190-240 µC/cm² liegt.

9. Verfahren nach Anspruch 1, **dadurch gekennzeichnet, dass** zur Herstellung des Prägewerkzeugs entweder der Master oder ein großflächiger Master benutzt wird, wobei der großflächige Master die durch replikative Vervielfältigung ausgedehnte Masterstruktur enthält.

10. Verfahren nach Anspruch 9, **dadurch gekennzeichnet, dass** aus dem Master bzw. dem großflächigen Master beispielsweise mittels galvanischer Abformung ein sogenannter Nickel-Shim hergestellt wird, der anschließend als Prägewerkzeug zur Herstellung von Produkten mit randomisierten Strukturen eingesetzt wird.

## Claims

1. A method for producing a security element having light-scattering structures, **characterized by** the following method steps:
a) producing a master having structures with randomized sub-structures, wherein the structures consist of lens-like structures made of a photoresist, which are smaller than 1 µm and are disposed in randomized form over an area, wherein the randomization is based on a regular lattice, wherein each point of the lattice is offset from its position in a regular lattice by a random amount and a random angle, wherein the lens-like structures are produced with the aid of laser-based lithography or electron beam lithography at the randomized positions by means of point exposures, wherein by means of random variation of an exposure dose also a size, in particular diameter and height, of the lens-like structures is randomized;
b) producing an embossing tool with randomized structures;
c) molding the randomized structures of the embossing tool in a surface of a thermoplastic or photosensitive layer;
d) if appropriate, further method steps for applying further functional layers or tailoring.

2. The method according to claim 1, **characterized in that** the lens-like structures are produced with the aid of laser-based lithography and the laser is a fiber laser.

3. The method according to claim 2, **characterized in that** the fiber laser has a wavelength of 780 nm, a pulse duration of 150 fs, a repetition rate of 100 MHz and a mean output power of <90mW.

4. The method according to any one of the claims 1 to 3, **characterized in that** the master structures are written into positive photo lacquers and are developed, thereby removing exposed material.

5. The method according to any one of the claims 1 to 4, **characterized in that** the lens-like structures are produced with the aid of laser-based lithography, wherein the exposure dose is in the range of 20-350 mJ/cm².

6. The method according to any one of the claims 1 or 4, **characterized in that** the lens-like structures are produced with the aid of electron beam lithography and have a size of 50-500 nm.

7. The method according to any one of the claims 1, 4 or 6, **characterized in that** the lens-like structures are produced with the aid of electron beam lithography, wherein PMMA is used as positive photoresist.

8. The method according to any one of the claims 1, 4, 6 or 7, **characterized in that** the lens-like structures are produced with the aid of electron beam lithography, wherein the exposure dose is in the range of 190-240 µC/cm².

9. The method according to claim 1, **characterized in that** for producing the embossing tool either the master or a large-area master is used, wherein the large-area master contains the master structure expanded by means of replicative duplication.

10. The method according to claim 9, **characterized in that** a so-called nickel shim is produced from the master or the large-area master for example by means of electroforming, which is subsequently used as embossing tool for producing products having randomized structures.

## Revendications

1. Procédé pour la fabrication d'un élément de sécurité avec des structures dispersant la lumière, **caractérisé en ce qu'**il comporte les étapes de procédé suivantes :
a) fabrication d'un maître-modèle avec des structures comportant des sous-structures randomisées, dans lequel les structures sont formées par des structures lenticulaires en vernis photosensible d'une taille inférieure à 1 µm réparties de façon randomisée sur une surface, la randomisation se faisant à partir d'une grille régulière dont chaque point est décalé d'une grandeur aléatoire et d'un angle aléatoire par rapport à sa position dans une grille régulière, les structures lenticulaires étant produites au moyen d'une lithographie par laser ou par faisceau d'électrons par insolation ponctuelle dans les positions randomisées, une variation aléatoire d'une dose d'insolation entraînant aussi la randomisation d'une grandeur, en particulier du diamètre et de la hauteur, des structures lenticulaires ;
b) fabrication d'un outil de gaufrage avec des structures randomisées ;
c) impression des structures randomisées de l'outil de gaufrage dans une surface d'une couche thermoplastique ou photosensible ;
d) éventuellement, autres étapes de procédé pour l'application d'autres couches fonctionnelles ou la confection.

2. Procédé selon la revendication 1, **caractérisé en ce que** les structures lenticulaires sont produites au moyen d'une lithographie par laser et le laser est un laser à fibre optique.

3. Procédé selon la revendication 2, **caractérisé en ce que** le laser à fibre optique a une longueur d'onde de 780 nm, une durée d'impulsions de 150 fs, un taux de répétition de 100 mHz et une puissance de sortie moyenne de < 90 mW.

4. Procédé selon l'une des revendications 1 à 3, **caractérisé en ce que** les structures du maître-modèle sont tracées dans des vernis photosensibles positifs et développées de sorte que la matière exposée est enlevée.

5. Procédé selon l'une des revendications 1 à 4, **caractérisé en ce que** les structures lenticulaires sont produites au moyen d'une lithographie par laser, la dose d'insolation étant comprise entre 20 et 350 mJ/cm².

6. Procédé selon l'une des revendications 1 ou 4, **caractérisé en ce que** les structures lenticulaires sont produites au moyen d'une lithographie par faisceau d'électrons et présentent une taille de 50 à 500 nm.

7. Procédé selon l'une des revendications 1, 4 ou 6, **caractérisé en ce que** les structures lenticulaires sont produites au moyen d'une lithographie par faisceau d'électrons en utilisant du PMMA comme vernis photosensible positif.

8. Procédé selon l'une des revendications 1, 4, 6 ou 7, **caractérisé en ce que** les structures lenticulaires sont produites au moyen d'une lithographie par faisceau d'électrons, la dose d'insolation étant comprise entre 190 et 240 µC/cm².

9. Procédé selon la revendication 1, **caractérisé en ce que** le maître-modèle ou un maître-modèle agrandi est utilisé pour fabriquer l'outil de gaufrage, le maître-modèle agrandi reprenant la structure du maître-modèle agrandie par sa reproduction répliquée.

10. Procédé selon la revendication 9, **caractérisé en ce qu'**est fabriqué à partir du maître-modèle ou du maître-modèle agrandi, par exemple par galvanoformage, une matrice dite « *nickel shim* » qui est ensuite utilisée comme outil de gaufrage pour fabriquer des produits dotés de structures randomisées.
